# EUROPEAN PATENT APPLICATION

(11) **EP 1 511 274 A1**
(43) Date of publication of application: **02.03.2005**
(21) Application number: 02728219.3
(22) Date of filing: 31.05.2002
(51) Int. Cl.: H04M 1/00, H04M 1/58

(54) **TRANSMITTER-RECEIVER**

(71) Applicant: MITSUBISHI DENKI KABUSHIKI KAISHA, Tokyo 100-8310 (JP)
(72) Inventor: IKEDA, Takashi, c/o MITSUBISHI DENKI K. K., Chiyoda-ku, Tokyo 100-8310 (JP)
(74) Representative: Sajda, Wolf E., Dipl.-Phys.
(86) International application number: PCT/JP2002/005401
(87) International publication number: WO 2003/103253

(57) **Abstract**

A noise suppressor (8) suppresses noise contained in speech converted by an A/D converter (2) into a digital signal. A sidetone level controller (9) controls a level of a speech signal with the noise suppressed by the noise suppressor (8), for output as a sidetone. A D/A converter (15) then converts a speech receiving signal with the sidetone added from a digital signal to an analog signal. Therefore, it becomes possible to prevent a level of the sidetone from being changed according to a level of the noise existing in the background of a talker, and to control the sidetone to allow the talker to talk at an appropriate volume.

## Description

### Technical Field

The present invention relates to a speech transmitting and receiving apparatus such as a cellular phone having a function to control a sidetone, and more particularly to a speech transmitting and receiving apparatus suppressing a noise level for sidetone control.

### Background Art

Recently, speech transmitting and receiving apparatuses such as cellular phones have become widespread. One of the main functions of such a speech transmitting and receiving apparatus is a function to control the level of a sidetone.

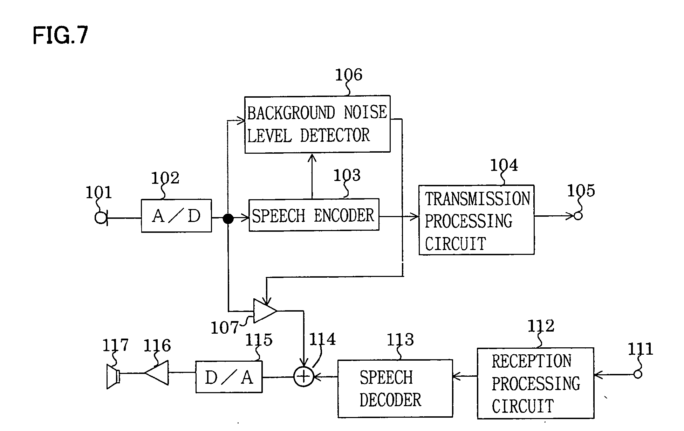

Fig. 7 is a block diagram illustrating a schematic structure of a conventional speech transmitting and receiving apparatus having a function to control the level of a sidetone. The speech transmitting and receiving apparatus includes a speech microphone 101 collecting speech of a user (talker) to generate a speech signal; an A/D (analog/digital) converter 102 converting the speech signal generated by speech microphone 101 from an analog signal to a digital signal; a speech encoder 103 encoding and compressing the speech signal converted by A/D converter 102 into the digital signal; a transmission processing circuit 104 performing signal processing on the encoded signal compressed by speech encoder 103 for transmission; an output terminal 105 for transmitting a transmitting signal generated by transmission processing circuit 104 via a telephone line, an antenna, or the like; a background noise level detector 106 detecting the level of background noise contained in the speech signal converted by A/D converter 102 into the digital signal; a variable gain amplifier 107 performing gain control on the speech signal to be returned back to a speech receiving unit as a sidetone; an input terminal 111 to which a signal is input via a telephone line, an antenna, or the like; a reception processing circuit 112 receiving the signal via input terminal 111 to perform signal processing; a speech decoder 113 decoding an encoded signal processed by reception processing circuit 112 to generate a speech receiving signal; an adder 114 adding the sidetone output from variable gain amplifier 107 to the speech receiving signal output from speech decoder 113; a D/A (digital/analog) converter 115 converting the speech receiving signal output from adder 114 from a digital signal to an analog signal; an amplifier 116 amplifying the analog signal output from D/A converter 115; and a speaker 117 outputting the speech receiving signal output from amplifier 116.

Speech microphone 101 collects the speech of the user (talker) to convert it to an electrical signal (a speech signal) for output. A/D converter 102 converts the speech signal output from speech microphone 101 from an analog signal to a digital signal for output.

Speech encoder 103, formed of an encoder for compressing speech data, performs information compression and encoding on the digital signal output from A/D converter 102 for output to transmission processing circuit 104.

Transmission processing circuit 104 performs signal processing on the speech data encoded by speech encoder 103 and modulates the data for transmission, and outputs the modulated signal to output terminal 105. Output terminal 105 transmits the modulated signal to the outside, via a telephone line, an antenna, or the like.

Background noise level detector 106 detects the level of the background noise, using each parameter calculated when speech encoder 103 performs the encoding. Background noise level detector 106 then controls variable gain amplifier 107 according to the detected background noise level, and changes a gain of the speech signal to be added to the speech receiving signal as a sidetone. Note that background noise level detector 106 may detect the background noise level according to the speech signal before A/D conversion.

Under the control by background noise level detector 106, variable gain amplifier 107 performs variable gain control on the digital signal output from A/D converter 102, and outputs the gain-controlled speech signal to adder 114. Note that variable gain amplifier 107 may be a variable attenuator having a gain of 1 or less.

Input terminal 111 receives a modulated signal from the outside, via a telephone line, an antenna, or the like. Reception processing circuit 112 performs signal processing on the modulated signal received via input terminal 111 for demodulation, and outputs the demodulated signal to speech decoder 113.

Speech decoder 113 performs processing on the demodulated signal output from reception processing circuit 112 in a manner to reverse the encoding performed in speech encoder 103 on the speech transmitting side, to decode the demodulated signal.

Adder 114 digitally adds the gain-controlled speech signal output from variable gain amplifier 107 to the speech receiving signal output from speech decoder 113, as the sidetone. D/A converter 115 converts the speech receiving signal output from adder 114 with the sidetone added into an analog signal for output to amplifier 116.

Amplifier 116 amplifies the analog signal output from D/A converter 115 for output to speaker 117. Speaker 117 reproduces the analog signal output from amplifier 116 to output the speech of a listener with the sidetone added. In this manner, the volume of the sidetone is controlled according to the background noise level, enabling the user to listen to the speech receiving signal output from speaker 117 with the sidetone added.

For example, when the level of the noise existing in the background of the talker is high, background noise level detector 106 controls variable gain amplifier 107 to reduce the gain, and thus the noise level contained in the sidetone can be reduced. However, since the level of the talker's speech signal is also reduced, there has been a problem that the sidetone control function does not effectively work.

The present invention is made to solve the aforementioned problem, and its first object is to provide a speech transmitting and receiving apparatus capable of controlling a sidetone to allow a talker to talk at an appropriate volume.

Its second object is to provide a speech transmitting and receiving apparatus preventing the level of a sidetone from being changed according to the level of noise existing in the background of a talker.

### Disclosure of the Invention

According to an aspect of the invention, a speech transmitting and receiving apparatus includes an A/D converter converting speech from an analog signal to a digital signal; a speech encoder encoding a speech signal converted by the A/D converter into the digital signal; a transmission processing circuit transmitting the speech signal encoded by the speech encoder; a reception processing circuit receiving an encoded speech receiving signal; a speech decoder decoding the speech receiving signal received by the reception processing circuit; a sidetone circuit suppressing noise contained in the speech signal converted by the A/D converter into the digital signal to generate a sidetone to be added to the speech receiving signal decoded by the speech decoder; and a D/A converter converting the speech receiving signal with the sidetone added from a digital signal to an analog signal.

The sidetone circuit suppresses the noise contained in the speech signal converted by the A/D converter into the digital signal, and then generates the sidetone to be added to the speech receiving signal decoded by the speech decoder. Therefore, it becomes possible to prevent a level of the sidetone from being changed according to a level of the noise.

Preferably, the sidetone circuit includes a noise suppressor suppressing the noise contained in the speech converted by the A/D converter into the digital signal, and a sidetone level controller controlling a level of the speech signal with the noise suppressed by the noise suppressor, for output as the sidetone.

Therefore, the level of the speech signal can be controlled to generate an appropriate sidetone.

Preferably, the sidetone circuit includes a noise suppressor suppressing the noise contained in the speech converted by the A/D converter into the digital signal, and a sidetone level controller controlling, according to a level of the speech signal with the noise suppressed by the noise suppressor and a level of the speech receiving signal decoded by the speech decoder, the level of the speech signal with the noise suppressed, for output as the sidetone.

Since the sidetone level controller controls the level of the sidetone according to the level of the speech signal and the level of the speech receiving signal, the sidetone can be controlled to allow a talker to talk at an appropriate volume.

Preferably, the sidetone circuit includes a noise suppressor suppressing the noise contained in the speech converted by the A/D converter into the digital signal, a background noise level detector detecting a level of background noise contained in the speech converted by the A/D converter into the digital signal, and a sidetone level controller selecting one of the speech converted by the A/D converter into the digital signal and the speech signal with the noise suppressed by the noise suppressor according to the level of the background noise detected by the background noise level detector, and controlling a level of the selected speech signal for output as the sidetone.

Since the sidetone level controller selects a speech signal according to the background noise level and controls the level of the sidetone, the level of the sidetone can be controlled not to be affected by the background noise level.

Preferably, the sidetone circuit includes a noise suppressor suppressing the noise contained in the speech converted by the A/D converter into the digital signal, a background noise level detector detecting a level of background noise contained in the speech converted by the A/D converter into the digital signal, and a sidetone level controller selecting one of the speech converted by the A/D converter into the digital signal and the speech signal with the noise suppressed by the noise suppressor according to the level of the background noise detected by the background noise level detector, and controlling, according to a level of the selected speech signal and a level of the speech receiving signal decoded by the speech decoder, the level of the selected speech signal, for output as the sidetone.

Since the sidetone level controller controls the level of the sidetone according to the level of the selected speech signal and the level of the speech receiving signal, the sidetone can be controlled to allow a talker to talk at an appropriate volume.

According to another aspect of the invention, a speech transmitting and receiving apparatus includes an A/D converter converting speech from an analog signal to a digital signal; a noise suppressor suppressing noise contained in a speech signal converted by the A/D converter into the digital signal; a speech encoder encoding the speech signal with the noise suppressed by the noise suppressor; a transmission processing circuit transmitting the speech signal encoded by the speech encoder; a reception processing circuit receiving an encoded speech receiving signal; a speech decoder decoding the speech receiving signal received by the reception processing circuit; a sidetone circuit generating a sidetone according to the speech signal with the noise suppressed by the noise suppressor; and a D/A converter converting the speech receiving signal with the sidetone added from a digital signal to an analog signal.

Since the sidetone circuit generates the sidetone to be added to the speech receiving signal decoded by the speech decoder according to the speech signal with the noise suppressed by the noise suppressor, it becomes possible to prevent a level of the sidetone from being changed according to a level of the noise. Further, since the speech encoder encodes the speech signal with the noise suppressed by the noise suppressor and the transmission processing circuit transmits the encoded speech signal, the speech having less noise can be transmitted to a listener.

Preferably, the sidetone circuit includes a sidetone level controller controlling a level of the speech signal with the noise suppressed by the noise suppressor, for output as the sidetone.

Therefore, the level of a transmitting signal can be controlled to generate an appropriate sidetone.

Preferably, the sidetone circuit includes a sidetone level controller controlling, according to a level of the speech signal with the noise suppressed by the noise suppressor and a level of the speech receiving signal decoded by the speech decoder, the level of the speech signal with the noise suppressed, for output as the sidetone.

Since the sidetone level controller controls the level of the sidetone according to the level of the speech signal and the level of the speech receiving signal, the sidetone can be controlled to allow a talker to talk at an appropriate volume.

### Brief Description of the Drawings

Fig. 1 is a block diagram showing a schematic structure of a speech transmitting and receiving apparatus having a sidetone circuit in accordance with a first embodiment of the present invention.
Fig. 2 is a block diagram showing a schematic structure of a speech transmitting and receiving apparatus having a sidetone circuit in accordance with a second embodiment of the present invention.
Fig. 3 is a block diagram showing a schematic structure of a speech transmitting and receiving apparatus having a sidetone circuit in accordance with a third embodiment of the present invention.
Fig. 4 is a block diagram showing a schematic structure of a speech transmitting and receiving apparatus having a sidetone circuit in accordance with a fourth embodiment of the present invention.
Fig. 5 is a block diagram showing a schematic structure of a speech transmitting and receiving apparatus having a sidetone circuit in accordance with a fifth embodiment of the present invention.
Fig. 6 is a block diagram showing a schematic structure of a speech transmitting and receiving apparatus having a sidetone circuit in accordance with a sixth embodiment of the present invention.
Fig. 7 is a block diagram showing a schematic structure of a conventional speech transmitting and receiving apparatus having a sidetone control function.

### Best Modes for Carrying Out the Invention

In the following, the present invention will be described in details, with reference to the accompanied drawings.

### First Embodiment

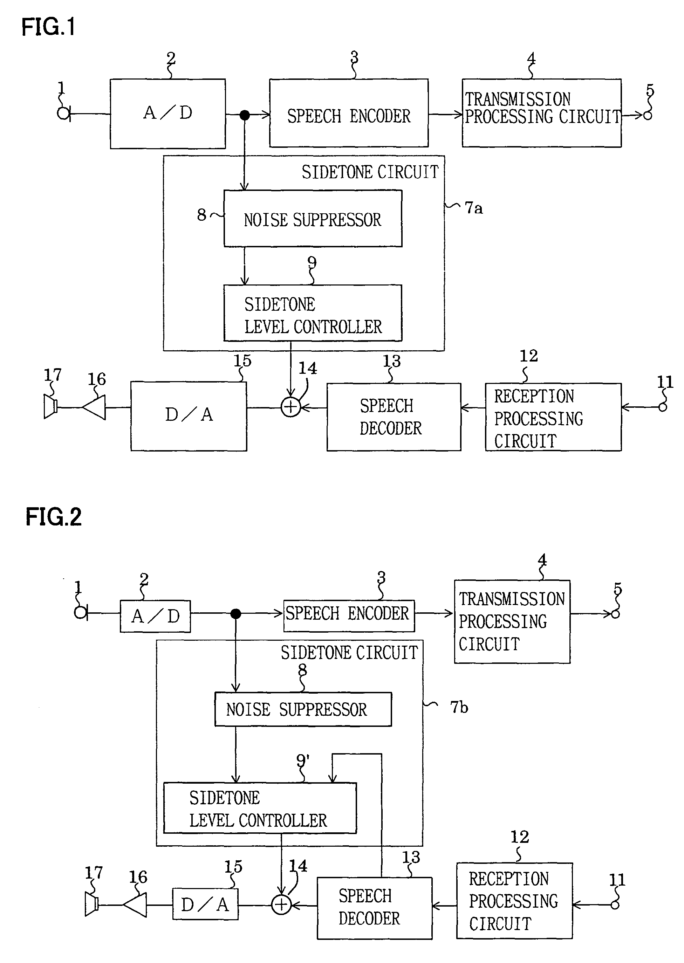

Fig. 1 is a block diagram illustrating a schematic structure of a speech transmitting and receiving apparatus having a sidetone circuit in accordance with a first embodiment of the present invention. The speech transmitting and receiving apparatus includes a speech microphone 1 collecting speech of a user (talker) to generate a speech signal; an A/D converter 2 converting the speech signal generated by speech microphone 1 from an analog signal to a digital signal; a speech encoder 3 encoding and compressing the speech signal converted by A/D converter 2 into the digital signal; a transmission processing circuit 4 performing signal processing on the encoded signal compressed by speech encoder 3 for transmission; an output terminal 5 for transmitting a transmitting signal generated by transmission processing circuit 4 via a telephone line, an antenna, or the like; a sidetone circuit 7a suppressing background noise contained in the speech signal converted by A/D converter 2 into the digital signal to generate a sidetone to be added to a speech receiving signal; an input terminal 11 to which a signal is input via a telephone line, an antenna, or the like; a reception processing circuit 12 receiving the signal via input terminal 11 to perform signal processing; a speech decoder 13 decoding an encoded signal processed by reception processing circuit 12 to generate the speech receiving signal; an adder 14 adding the sidetone output from sidetone circuit 7a to the speech receiving signal output from speech decoder 13; a D/A converter 15 converting the speech receiving signal output from adder 14 from a digital signal to an analog signal; an amplifier 16 amplifying the analog signal output from D/A converter 15; and a speaker 17 outputting the speech receiving signal output from amplifier 16.

Speech microphone 1 collects the speech of the user (talker) to convert it to an electrical signal (a speech signal) for output. A/D converter 2 converts the speech signal output from speech microphone 1 from an analog signal to a digital signal for output. The speech signal converted into the digital signal is input to speech encoder 3 and sidetone circuit 7a.

Speech encoder 3, formed of an encoder for compressing speech data, performs information compression and encoding on the digital signal output from A/D converter 2 for output to transmission processing circuit 4.

Transmission processing circuit 4 performs signal processing on the speech data encoded by speech encoder 3 and modulates the data for transmission, and outputs the modulated signal to output terminal 5. Output terminal 5 transmits the modulated signal to the outside, via a telephone line, an antenna, or the like.

Input terminal 11 receives a modulated signal from the outside, via a telephone line, an antenna, or the like. Reception processing circuit 12 performs signal processing on the modulated signal received via input terminal 11 for demodulation, and outputs the demodulated signal to speech decoder 13.

Speech decoder 13 performs processing on the demodulated signal output from reception processing circuit 12 in a manner to reverse the encoding performed in speech encoder 3 on the speech transmitting side, to decode the demodulated signal. Adder 14 digitally adds the sidetone output from sidetone circuit 7a to the speech receiving signal output from speech decoder 13.

D/A converter 15 converts the speech receiving signal output from adder 14 with the sidetone added into an analog signal for output to amplifier 16. Amplifier 16 amplifies the analog signal output from D/A converter 15 for output to speaker 17. Speaker 17 reproduces the analog signal output from amplifier 16 to output the speech of the talker with the sidetone added.

Sidetone circuit 7a includes a noise suppressor 8 suppressing background noise contained in the speech signal output from A/D converter 2 after being converted into the digital signal, and a sidetone level controller 9 controlling the level of the speech signal with the noise suppressed by noise suppressor 8 for output to adder 14 as the sidetone.

Noise suppressor 8 performs noise suppression such as Kalman filtering, for example, on the speech signal output from A/D converter 2 after being converted into the digital signal, to output the speech signal with the background noise suppressed. It should be noted that noise suppressor 8 may be filtering processing such as Wiener filtering for performing noise suppression in time domain, spectrum subtraction processing for performing noise suppression in frequency domain, or the like.

Sidetone level controller 9 digitally performs level control on the speech signal output from noise suppressor 8 with the noise suppressed, for output to adder 14 as the sidetone. Sidetone level controller 9 performs the level control by digitally multiplying the speech signal by a predetermined gain, such that the sidetone is added to the speech receiving signal at an appropriate volume.

As described above, according to the speech transmitting and receiving apparatus in the present embodiment, sidetone level controller 9 controls the level of the speech signal with the background noise suppressed by noise suppressor 8, for output to adder 14. Therefore, while the level of the noise existing in the background of the talker is suppressed, the level of the sidetone is not changed according to the magnitude of the noise level. Thus, a function equivalent to a sidetone control function available in a fixed telephone can be achieved, enabling the talker to talk at an appropriate volume.

### Second Embodiment

Figure 2 is a block diagram showing a schematic structure of a speech transmitting and receiving apparatus in accordance with a second embodiment of the present invention. The speech transmitting and receiving apparatus in the present embodiment is similar to that in the first embodiment shown in Fig. 1, except that the sidetone level controller controls the level of the sidetone according to the level of the speech signal and the level of the speech receiving signal. Therefore, detailed description of the same structure and function will not be repeated. It should be noted that the sidetone circuit and the sidetone level controller in the present embodiment will be indicated by reference numerals 7b and 9', respectively.

A sidetone circuit 7b includes noise suppressor 8 suppressing the background noise contained in the speech signal output from A/D converter 2 after being converted into the digital signal, and a sidetone level controller 9' controlling the level of the sidetone according to the level of the speech signal and the level of the speech receiving signal, for output to adder 14.

Sidetone level controller 9' controls the level of the sidetone according to the speech signal output from noise suppressor 8 with the background noise suppressed and the level of the speech receiving signal output from speech decoder 13 after being decoded. For example, when the level of the speech signal is high and the level of the speech receiving signal is low, sidetone level controller 9' multiplies the speech signal by a gain to reduce the level of the sidetone, and thus relatively enhances the articulation of received speech.

Generally, a talker increases his or her speech level when the level of the sidetone returning back to his or her ear is low, and decreases the speech level when the level of the sidetone is high. Accordingly, when the level of the audio speech signal is low and the level of the audio speech receiving signal is high, sidetone level controller 9' multiplies the speech signal by a gain to increase the level of the sidetone, and thus causes a relative decrease in the speech level of the talker. Note that sidetone level controller 9' determines the level of the speech signal and the level of the speech receiving signal by calculating for example an average power of speech.

As described above, according to the speech transmitting and receiving apparatus in the present embodiment, sidetone level controller 9' controls the level of the sidetone according to the level of the speech signal and the level of the speech receiving signal. Therefore, the sidetone can be added to the speech receiving signal output from speech decoder 13 such that the speech level of the talker will be appropriate, enabling the talker to talk at an appropriate volume.

### Third Embodiment

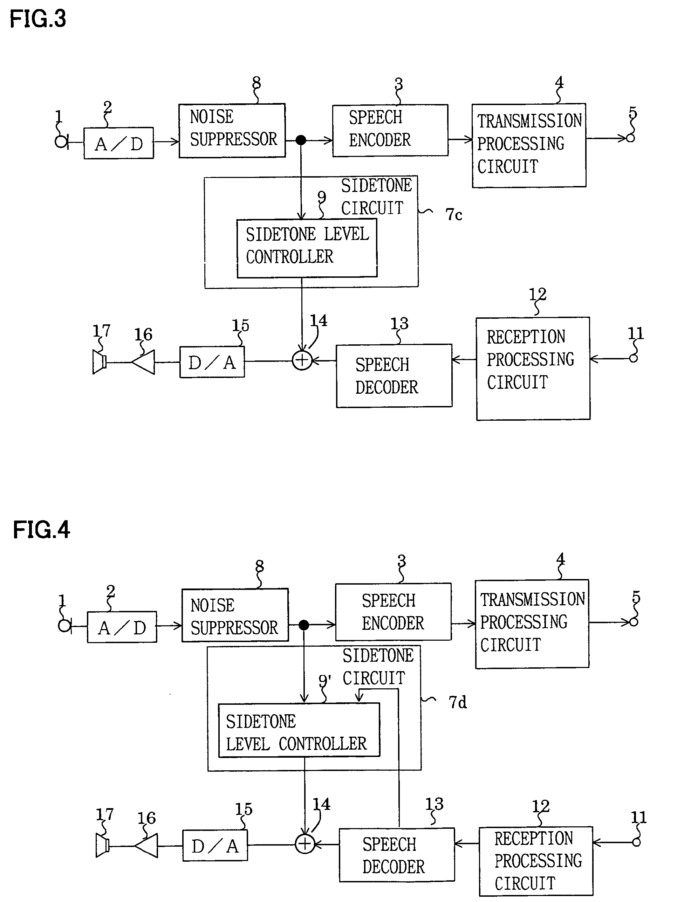

Figure 3 is a block diagram showing a schematic structure of a speech transmitting and receiving apparatus in accordance with a third embodiment of the present invention. The speech transmitting and receiving apparatus in the present embodiment is similar to that in the first embodiment shown in Fig. 1, except that noise suppressor 8 provided within sidetone circuit 7a is connected between A/D converter 2 and speech encoder 3. Therefore, detailed description of the same structure and function will not be repeated. It should be noted that the sidetone circuit in the present embodiment will be indicated by a reference numeral 7c.

Speech encoder 3 performs information compression and encoding on the speech signal with the background noise suppressed by noise suppressor 8, for output to transmission processing circuit 4.

A sidetone circuit 7c includes sidetone level controller 9 controlling the level of the speech signal with the background noise suppressed by noise suppressor 8, for output to adder 14 as a sidetone.

As described above, according to the speech transmitting and receiving apparatus in the present embodiment, noise suppressor 8 is connected between A/D converter 2 and speech encoder 3. Thus, in addition to the effects described in the first embodiment, the speech signal can be transmitted via a telephone line, an antenna, or the like, with the background noise contained therein suppressed, and a transmitting signal with the noise suppressed can be transmitted to a speech receiving side.

Further, when a noise suppressor is already installed as in a typical cellular phone, the speech transmitting and receiving apparatus in the present embodiment can be implemented just by modifying the structure of a sidetone circuit.

### Fourth Embodiment

Figure 4 is a block diagram showing a schematic structure of a speech transmitting and receiving apparatus in accordance with a fourth embodiment of the present invention. The speech transmitting and receiving apparatus in the present embodiment is similar to that in the second embodiment shown in Fig. 2, except that noise suppressor 8 provided within sidetone circuit 7b is connected between A/D converter 2 and speech encoder 3. Therefore, detailed description of the same structure and function will not be repeated. It should be noted that the sidetone circuit in the present embodiment will be indicated by a reference numeral 7d.

Speech encoder 3 performs information compression and encoding on the speech signal with the background noise suppressed by noise suppressor 8, for output to transmission processing circuit 4.

A sidetone circuit 7d includes sidetone level controller 9' controlling the level of the sidetone according to the level of the speech signal and the level of the speech receiving signal, for output to adder 14.

Sidetone level controller 9' controls the level of the sidetone according to the speech signal output from noise suppressor 8 with the background noise suppressed and the level of the speech receiving signal output from speech decoder 13 after being decoded.

As described above, according to the speech transmitting and receiving apparatus in the present embodiment, noise suppressor 8 is connected between A/D converter 2 and speech encoder 3. Thus, in addition to the effects described in the second embodiment, the speech signal can be transmitted via a telephone line, an antenna, or the like, with the background noise contained therein suppressed, and a transmitting signal with the noise suppressed can be transmitted to a speech receiving side.

Further, when a noise suppressor is already installed as in a typical cellular phone, the speech transmitting and receiving apparatus in the present embodiment can be implemented just by modifying the structure of a sidetone circuit.

### Fifth Embodiment

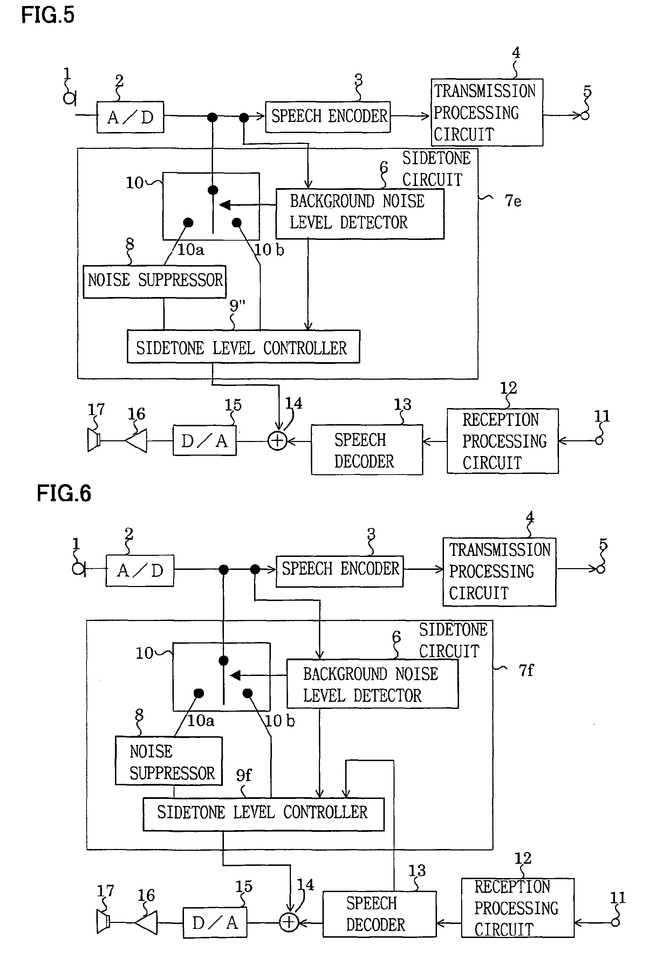

Figure 5 is a block diagram showing a schematic structure of a speech transmitting and receiving apparatus in accordance with a fifth embodiment of the present invention. The speech transmitting and receiving apparatus in the present embodiment is similar to that in the first embodiment shown in Fig. 1, except that the sidetone circuit has a different structure. Therefore, detailed description of the same structure and function will not be repeated. It should be noted that the sidetone circuit in the present embodiment will be indicated by a reference numeral 7e.

A sidetone circuit 7e includes a background noise level detector 6 detecting the level of background noise contained in the speech signal converted by A/D converter 2 into the digital signal; a switch 10 selectively outputting the speech signal output from A/D converter 2 according to the background noise level output from background noise level detector 6; noise suppressor 8 suppressing the background noise contained in the speech signal output from A/D converter 2 after being converted into the digital signal; and a sidetone level controller 9" controlling the level of a sidetone according to either the speech signal output from A/D converter 2 or the speech signal output from noise suppressor 8 with the background noise suppressed, and the background noise level detected by background noise level detector 6, for output to adder 14.

Background noise level detector 6 receives the speech signal output from A/D converter 2, and detects the background noise level, using a parameter such as the power of the speech signal, for example. If the detected level is at or above a predetermined threshold, background noise level detector 6 determines that the talker's background noise level is high, and connects an input terminal of switch 10 to an output terminal 10a to allow the speech signal output from A/D converter 2 to be supplied to noise suppressor 8.

If the detected level is less than the predetermined threshold, background noise level detector 6 determines that the talker's background noise level is low, and connects the input terminal of switch 10 to an output terminal 10b to allow the speech signal output from A/D converter 2 to be supplied directly to sidetone level controller 9".

When the background noise level output from background noise level detector 6 is low, sidetone level controller 9" digitally controls the level of the speech signal output from A/D converter 2 according to the background noise level, and outputs the level-controlled speech signal to adder 14 as the sidetone.

When the background noise level output from background noise level detector 6 is high, sidetone level controller 9" digitally controls the level of the speech signal output from noise suppressor 8 with the noise suppressed according to the background noise level, and outputs the level-controlled speech signal to adder 14 as the sidetone.

As described above, according to the speech transmitting and receiving apparatus in the present embodiment, whether to suppress the background noise is determined according to the background noise level output from background noise level detector 6, and the level of the sidetone is controlled according to the background noise level. Therefore, the sidetone can be added to the speech receiving signal at an appropriate level, regardless of the magnitude of the noise level existing in the background of the talker, enabling the talker to talk at an appropriate volume.

### Sixth Embodiment

Figure 6 is a block diagram showing a schematic structure of a speech transmitting and receiving apparatus in accordance with a sixth embodiment of the present invention. The speech transmitting and receiving apparatus in the present embodiment is similar to that in the fifth embodiment shown in Fig. 5, except that the sidetone level controller controls the level of the sidetone according to the background noise level, the level of the speech signal, and the level of the speech receiving signal. Therefore, detailed description of the same structure and function will not be repeated. It should be noted that the sidetone circuit and the sidetone level controller in the present embodiment will be indicated by reference numerals 7f and 9f, respectively.

A sidetone circuit 7f includes a sidetone level controller 9f controlling the level of a sidetone according to the level of the speech signal output from A/D converter 2 or noise suppressor 8, the level of the audio speech receiving signal output from speech decoder 13, and the background noise level output from background noise level detector 6, for output to adder 14.

When the background noise output from background noise level detector 6 is low, the speech signal output from A/D converter 2 is supplied to sidetone level controller 9f. When the background noise output from background noise level detector 6 is high, the speech signal output from noise suppressor 8 with the noise suppressed is supplied to sidetone level controller 9f.

Sidetone level controller 9f controls the level of the sidetone according to the level of the audio speech signal output from A/D converter 2 or the level of the speech signal output from noise suppressor 8 with the noise suppressed, and the level of the speech receiving signal output from speech decoder 13 after being decoded. For example, when the level of the speech signal is high and the level of the speech receiving signal is low, sidetone level controller 9f multiplies the speech signal by a gain to reduce the level of the sidetone, and thus relatively enhances the articulation of received speech.

Generally, a talker increases his or her speech level when the level of the sidetone returning back to his or her ear is low, and decreases the speech level when the level of the sidetone is high. Accordingly, when the level of the speech signal is low and the level of the speech receiving signal is high, sidetone level controller 9f multiplies the speech signal by a gain to increase the level of the sidetone, and thus causes a relative decrease in the speech level of the talker. Note that sidetone level controller 9f determines the level of the speech signal and the level of the speech receiving signal by calculating for example an average power of speech.

As described above, according to the speech transmitting and receiving apparatus in the present embodiment, sidetone level controller 9f is designed to control the level of the sidetone according to the level of the speech signal and the level of the speech receiving signal. Therefore, in addition to the effects described in the fifth embodiment, the sidetone can be added to the speech receiving signal output from speech decoder 13 such that the speech level of the talker will be appropriate.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A speech transmitting and receiving apparatus, comprising:
a first converter (2) converting speech from an analog signal to a digital signal;
a speech encoder (3) encoding a speech signal converted by said first converter (2) into the digital signal;
a transmission processing circuit (4) transmitting the speech signal encoded by said speech encoder (3);
a reception processing circuit (12) receiving an encoded speech receiving signal;
a speech decoder (13) decoding the speech receiving signal received by said reception processing circuit (12);
a sidetone circuit (7a, 7b, 7e, 7f) suppressing noise contained in the speech signal converted by said first converter (2) into the digital signal to generate a sidetone to be added to the speech receiving signal decoded by said speech decoder (13); and
a second converter (15) converting the speech receiving signal with the sidetone added from a digital signal to an analog signal.

2. The speech transmitting and receiving apparatus according to claim 1, wherein said sidetone circuit (7a) includes:
a noise suppressor (8) suppressing the noise contained in the speech converted by said first converter (2) into the digital signal, and
a sidetone level controller (9) controlling a level of the speech signal with the noise suppressed by said noise suppressor (8), for output as the sidetone.

3. The speech transmitting and receiving apparatus according to claim 1, wherein said sidetone circuit (7b) includes:
a noise suppressor (8) suppressing the noise contained in the speech converted by said first converter (2) into the digital signal, and
a sidetone level controller (9') controlling, according to a level of the speech signal with the noise suppressed by said noise suppressor (8) and a level of the speech receiving signal decoded by said speech decoder (13), said level of the speech signal with the noise suppressed, for output as the sidetone.

4. The speech transmitting and receiving apparatus according to claim 1, wherein said sidetone circuit (7e) includes:
a noise suppressor (8) suppressing the noise contained in the speech converted by said first converter (2) into the digital signal,
a background noise level detector (6) detecting a level of background noise contained in the speech converted by said first converter (2) into the digital signal, and
a sidetone level controller (9') selecting one of the speech converted by said first converter (2) into the digital signal and the speech signal with the noise suppressed by said noise suppressor (8) according to the level of the background noise detected by said background noise level detector (6), and controlling a level of the selected speech signal for output as the sidetone.

5. The speech transmitting and receiving apparatus according to claim 1, wherein said sidetone circuit (7f) includes:
a noise suppressor (8) suppressing the noise contained in the speech converted by said first converter (2) into the digital signal,
a background noise level detector (6) detecting a level of background noise contained in the speech converted by said first converter (2) into the digital signal, and
a sidetone level controller (9f) selecting one of the speech converted by said first converter (2) into the digital signal and the speech signal with the noise suppressed by said noise suppressor (8) according to the level of the background noise detected by said background noise level detector (6), and controlling, according to a level of the selected speech signal and a level of the speech receiving signal decoded by said speech decoder (13), said level of the selected speech signal, for output as the sidetone.

6. A speech transmitting and receiving apparatus, comprising:
a first converter (2) converting speech from an analog signal to a digital signal;
a noise suppressor (8) suppressing noise contained in a speech signal converted by said first converter (2) into the digital signal;
a speech encoder (3) encoding the speech signal with the noise suppressed by said noise suppressor (8);
a transmission processing circuit (4) transmitting the speech signal encoded by said speech encoder (3);
a reception processing circuit (12) receiving an encoded speech receiving signal;
a speech decoder (13) decoding the speech receiving signal received by said reception processing circuit (12);
a sidetone circuit (7c, 7d) generating a sidetone according to the speech signal with the noise suppressed by said noise suppressor (8); and
a second converter (15) converting the speech receiving signal with the sidetone added from a digital signal to an analog signal.

7. The speech transmitting and receiving apparatus according to claim 6, wherein said sidetone circuit (7c) includes a sidetone level controller (9) controlling a level of the speech signal with the noise suppressed by said noise suppressor (8), for output as the sidetone.

8. The speech transmitting and receiving apparatus according to claim 6, wherein said sidetone circuit (7d) includes a sidetone level controller (9') controlling, according to a level of the speech signal with the noise suppressed by said noise suppressor (8) and a level of the speech receiving signal decoded by said speech decoder (13), said level of the speech signal with the noise suppressed, for output as the sidetone.
